# EUROPEAN PATENT SPECIFICATION

(11) **EP 3 028 928 B1**
(45) Date of publication and mention of the grant of the patent: **05.12.2018**
(21) Application number: 16152455.8
(22) Date of filing: 22.12.2009
(51) Int. Cl.: B62D 63/02, F41H 7/04, F41A 23/34, F41A 23/42

(54) **MOTORIZED VEHICLE COMPRISING A DRIVER MODULE WITH V-SHAPED UNDERSIDE AND SIDE MODULE WITH V-SHAPED UNDERSIDE**
FAHRZEUG UMFASSEND EIN FAHRERMODUL MIT V-FÖRMIGEM BODEN UND EIN SEITENMODUL MIT V-FÖRMIGEM BODEN
VÉHICULE COMPRENANT UN MODULE AVEC VENTRE EN FORME DE V POUR UN CONDUCTEUR ET UN MODULE LATÉRALE AVEC VENTRE EN FORME DE V

(30) Priority: 29.12.2008 US 344630
(43) Date of publication of application: 08.06.2016
(62) Divisional of application: 09844465.6
(73) Proprietor: Hal-Tech Limited, Plain City, OH 43064 (US)
(72) Inventor: HALLIDAY, Donald R., Powell, OH 43065 (US)
(74) Representative: Lecomte & Partners

(56) References cited:
- DE-A1- 19 619 865
- RU-C1- 2 125 700
- US-A- 5 401 056
- US-A1- 2005 257 679

## Description

### BACKGROUND

The present disclosure relates to motorized vehicles suitable for military use and more particularly to a modular military vehicle that can be adapted for non-military uses.

A multi-purpose vehicle, suitable for military, homeland security, disaster/emergency response, and other uses, should be versatile. It should be able to protect the operators and be highly deliverable to any site, adaptable, maintainable, and agile. Also, it should be armored and operable over rugged terrain and hostile environments, including, for example, desert and frigid conditions. Such vehicle further should be highly maneuverable.

Patent document published DE 196 19 865 A1 discloses a vehicle according to the preamble of claim 1.

Patent document published US 2005/0257679 A1 discloses a mine protection vehicle system with a front engine block with a front wheel axle, a rear block with a rear wheel axle and crew main block between the front and rear blocks. The crew main block features a v-shaped underside.

It is such a vehicle that in the present disclosure is addressed.

### BRIEF SUMMARY

The invention is directed to a vehicle according to claim 1. Further developments of the invention are in accordance with dependent claims 2-11.

### BRIEF DESCRIPTION OF THE DRAWINGS

For a fuller understanding of the nature and advantages of the present modular vehicle, reference should be had to the following detailed description taken in connection with the accompanying drawings, in which:
Fig. 1 is an isometric view of the modular military vehicle carrying a pair of side, personnel pods and 3 cantilevered cargo pods; Fig. 2 is a front view of the modular military vehicle of Fig. 1 ;
Fig. 2A is a simplified schematic view of the modular military vehicle of Fig. 2 showing the blast energy dissipation paths resulting from the design of the bottoms of the modules;
Fig. 3 is a side view of the modular military vehicle of Fig. 1 ; Fig. 4 is an overhead view of the modular military vehicle of Fig. 1 ;
Fig. 5 is an underside view of the modular military vehicle of Fig. 1 ; Fig. 6 is a front view like that in Fig. 1 with the side pods deployed; Fig. 6A is an enlarged view of the frangible coupling system of the side pods to the CCM; Fig. 6B is an isometric of the shock absorbed element of the frangible coupling system depicted in Fig. 6A;
Fig. 7 is an underside view of the pod-deployed vehicle in Fig. 6;
Fig. 7A is an isometric view of one of the tether assemblies seen in Fig. 7;
Fig. 7B is a side view of the tether assembly shown in Fig. 7B;
Fig. 8 is a side view of the modular military vehicle of Fig. 1 showing seated personnel, engine, and the like in phantom;
Fig. 9 is an isometric view of the modular military vehicle fitted with ambulance side pods, said vehicle being not in accordance with the invention;
Fig. 10 is a front view of the modular ambulance vehicle of Fig. 9;
Fig. 11 is a side view of the modular ambulance vehicle of Fig. 9;
Fig. 12 is a top view of the modular ambulance vehicle of Fig. 9;
Fig. 13 is a rear isometric view of the modular ambulance vehicle of Fig. 9;
Fig. 14 is an isometric view of the modular military vehicle with only 1 side pod, but with a rear personnel pod; Fig. 15 is a sectional view taken along line 15-15 of Fig. 12;

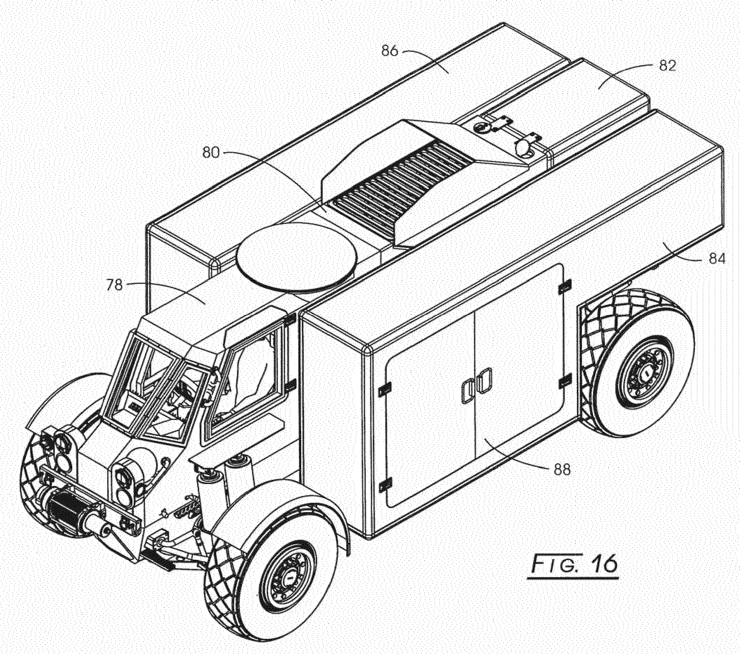

Fig. 16 is an isometric view of the modular military vehicle fitted with cargo side pods;

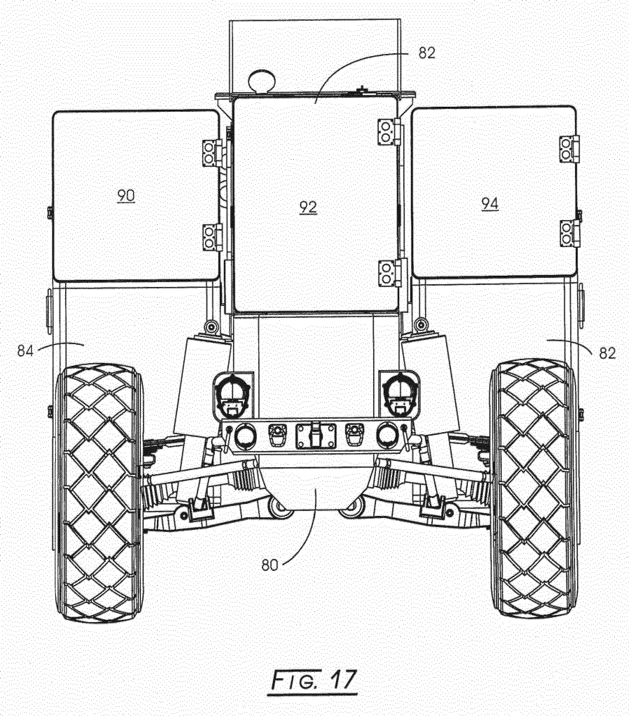

Fig. 17 is a rear view of the modular cargo vehicle of Fig. 16;
Fig. 18 is an isometric view of the modular military vehicle without side pods, but fitted with top-mounted armament and a movable rear storage module, said vehicle being not in accordance with the invention;
Fig. 19 is an isometric view of the modular military vehicle fitted with side armament that includes missiles, and a rear storage module for carrying, for example, extra armament, missiles, or the like, said vehicle being not in accordance with the invention;
Fig. 20 is an isometric view of a side pod transport for conveying electrical generators and fuel drums;
Fig. 21 is an isometric view of a side pod transport configured as a storage cabinet;
Fig. 22 is an isometric side view of the modular military vehicle adapted as a fuel tanker by configuring with side and rear fuel tanks, said vehicle being not in accordance with the invention;
Fig. 23 is an isometric view of a side pod configured to convey 3 soldiers;
Fig. 24 is an isometric view of the short wheelbase modular military vehicle with a pair of single soldier side pods, a single drive CCM module and a rear shelter;
Fig. 25 is the short wheelbase shelter modular military vehicle of Fig. 24 with no soldier side pods;
Fig. 26 is an isometric view of another modular military vehicle embodiment having a one-person driver module, side pods for soldiers, and a rear cargo shelter;
Fig. 27 is an overhead view of another modular military vehicle embodiment designed only for troop transport;
Fig. 28 is a side isometric view of a standing soldier (medic from Fig. 15) fitted with a SAPI (small arms protection inserts) panel affixed to his helmet;
Fig. 29 is a rear view of the medic of Fig. 28 showing the back-carried SAPI unit; Fig. 30 is a side view of the medic seated, but still wearing the extended SAPI unit;
Fig. 31 is a rear view of the seated medic of Fig. 30;
Fig. 32 is an isometric view of a streamlined modular passenger vehicle without side pods, said vehicle being not in accordance with the invention;
Fig. 33 is an isometric view of a streamlined modular passenger vehicle with side passenger pods, said vehicle being not in accordance with the invention;
Fig. 34 is an isometric view of a streamlined camping modular vehicle with side pods, said vehicle being not in accordance with the invention;
Fig. 35 is an isometric view of a streamlined passenger modular vehicle with cargo side pods, said vehicle being not in accordance with the invention;
Fig. 36 is an isometric view of a troop carrier embodiment of the modular military vehicle having an enlarged driver module suitable for up to, for example, 3 troops to occupy, troop side pods, and rear troop pod, said vehicle being not in accordance with the invention;
Fig. 37 is an isometric view of a troop carrier embodiment of the modular military vehicle with enlarged driver module, troop side pods, and rear storage pod, said vehicle being not in accordance with the invention;
Fig. 38 is an isometric view of an alternate design for a less than 20,000 lb gross vehicle weight, tactical wheeled vehicle having 3 primary seats and two single-seat side pods, said vehicle being not in accordance with the invention;
Fig. 39 is an exploded view of the vehicle of Fig. 38;
Fig. 40 is a top view of the vehicle of Fig. 38;
Fig. 41 is a side elevational view of the vehicle of Fig. 38;
Fig. 42 is a bottom view of the vehicle of Fig. 38;
Fig. 43 is a front view of the vehicle of Fig. 38;
Fig. 44 is a sectional view taken along line 44-44 of Fig. 41;
Fig. 45 is a sectional view taken along line 45-45 of Fig. 42;
Fig. 46 is an isometric view of a tracked vehicle embodiment of the modular military vehicle, said vehicle being not in accordance with the invention;
Fig. 47 is an exploded view of the tracked vehicle of Fig. 46;
Fig. 48 is an isometric view of an alternate embodiment of the tracked vehicle embodiment, said vehicle being not in accordance with the invention;
Fig. 49 is an exploded view of the an alternate embodiment of the tracked vehicle embodiment of Fig. 48; and

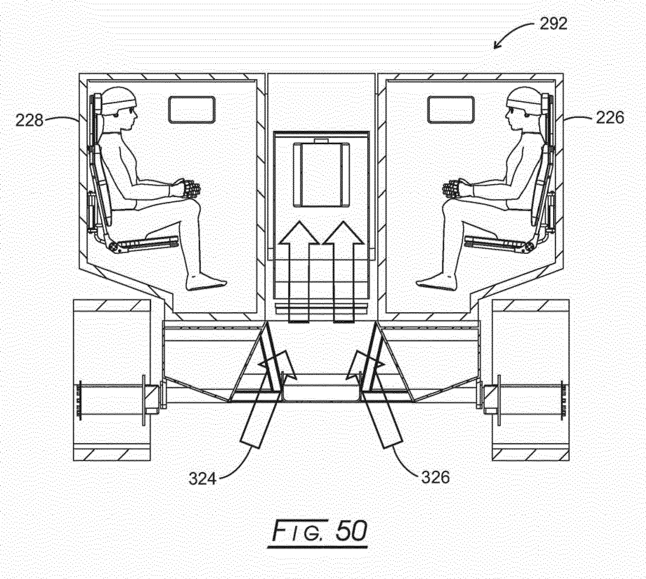

Figure 50 is a sectional view taken along line 50-50 of Fig. 48.

The drawings will be described in greater detail below. Like components will carry the same numerical identification in different drawings and embodiments.

### DETAILED DESCRIPTION

The disclosed modular vehicle primarily is designed for military use. For such use, however, the modular vehicle needs to be readily transported by air (e.g., cargo plane, helicopter, etc.) to remote hostile territory; withstand explosive blasts, bullets, and like insults; be easy to maintain and repair; readily convertible for cargo use, troop transport, wounded soldier (ambulance) transport; provide cover and support for ground soldier advancement; and the like. The disclosed modular vehicle accomplishes each of these tasks and more, as the skilled artisan will appreciate based on the present disclosure. Its design flexibility further enables the disclosed modular vehicle to be adapted for passenger use, civilian ambulance use, civilian cargo use, and the like.

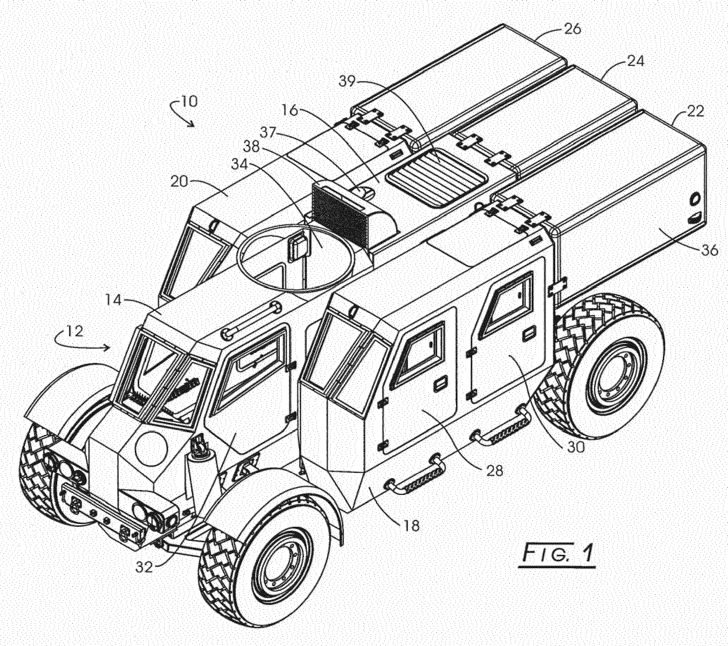

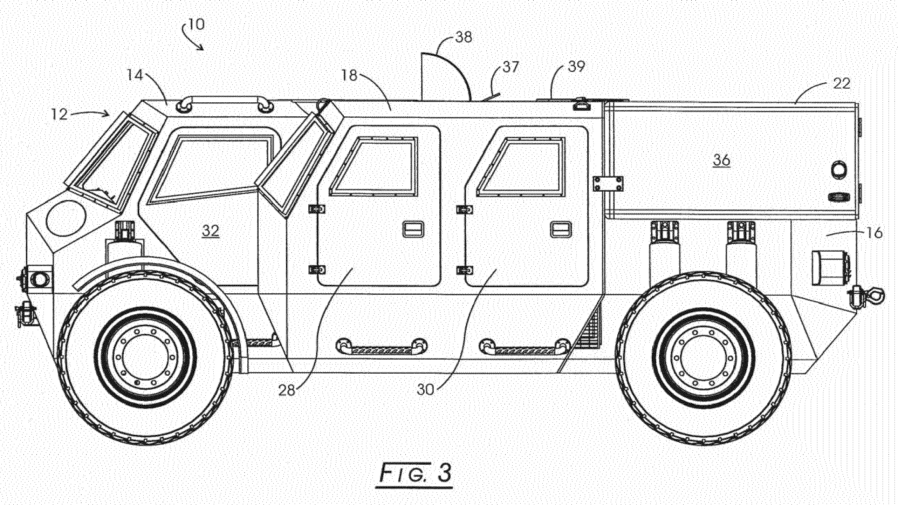

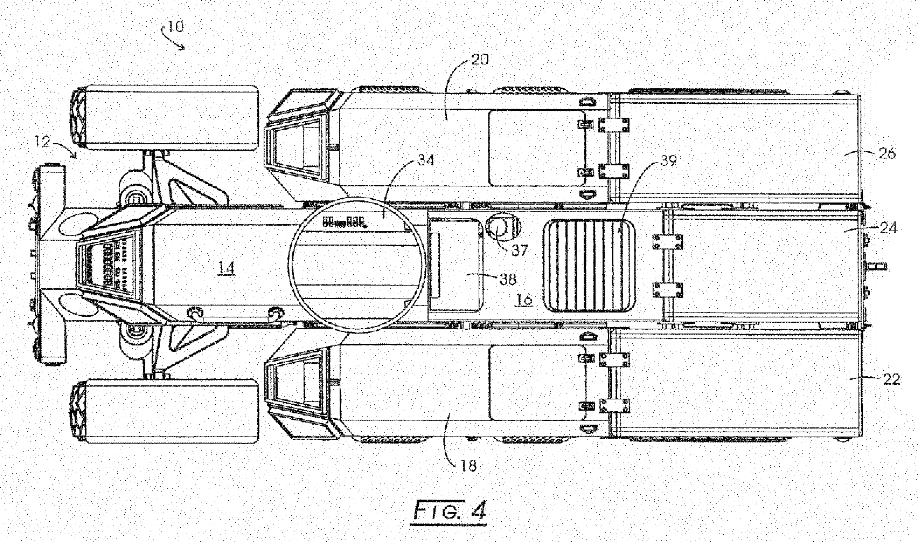

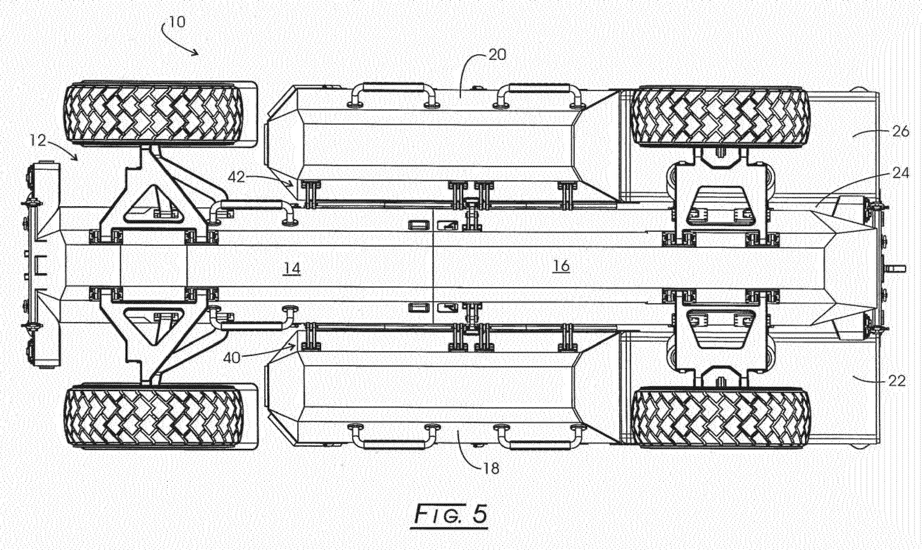

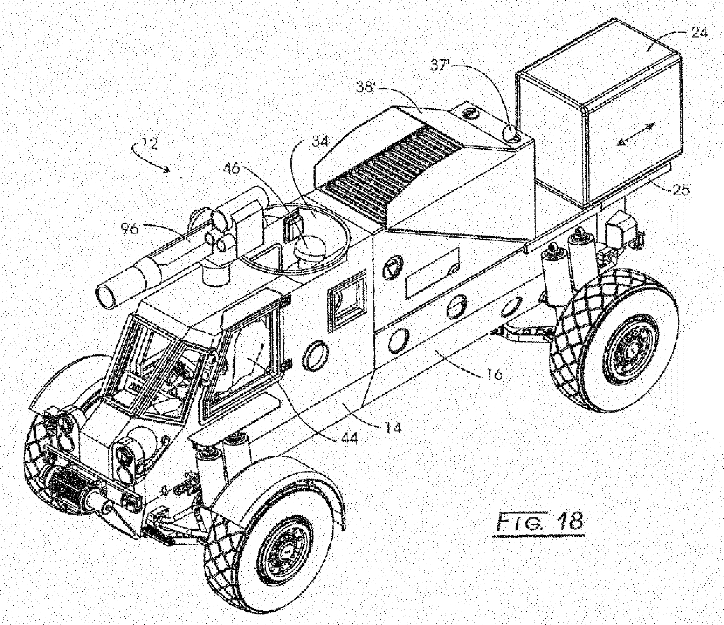

Referring initially to Figs. 1-5, a modular military vehicle, 10, is shown to include a central chassis module or CCM, 12 (see Fig. 18), composed of a driver module, 14, and an engine module, 16. Vehicle 10 also includes two side pods, 18 and 20, and three rear pods, 22, 24, and 26. Equally these three pods could be a single pod across the rear of the vehicle. In these figures, side pods 18 and 20 carry personnel, while rear pods 22, 24, and 26 carry cargo. Vehicle suspension, steering, wheels/tires, transmission, headlights, windows (glass or polymer, often bullet-proof), and the like will be provided in conventional fashion adapted to the intended use of vehicle 10. Driver module 14 and side modules 18 and 20 all are fitted with doors, such as doors, 28 and 30, on side pod 18, and a door, 32, on driver module 14, for ingress and egress of personnel. Driver module 14 is adapted for in-line front-to-back seating of two personnel with the driver entering module 14 through door 32 and the rear personnel entering module 14 via an overhead opening, 34 or through door 32 without the driver in position and the driver seat having the capacity to tilt forward. Access to cargo modules 22, 24, and 26 can be gained by side or rear doors, such as, for example, a side door, 36, for module 22. Desirably, driver module 14 has a rear bulkhead to allow for ease of building the internal elements of the module 14.

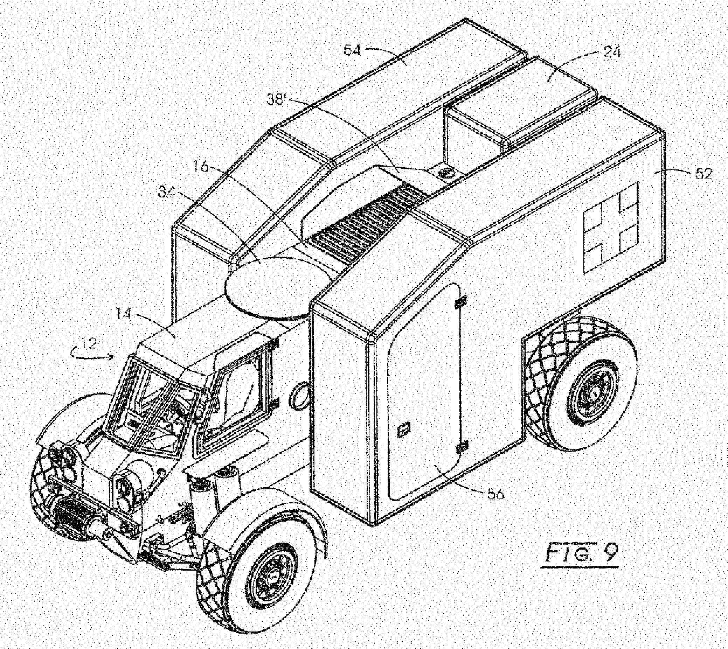

A retractable/extendable engine air inlet, 38, is seen in an extended position from the top of engine module 16 (two engine configuration forms shown in Fig 1 and Fig 9). Air inlet 38 can be retracted or removed. Its location atop modular vehicle 10 keeps it above much of the dust created by vehicle 10 and events occurring on the ground in the vicinity of vehicle 10. An exhaust port, 37, for the engine exhaust is disposed rearward of air inlet 38 or air can exit down over the engine and exit via holes at the rear of the CCM rear engine module. In one configuration, a grate, 39, allows air to exit the engine compartment. Not only will be air be cleaner atop vehicle 10, but it will be cooler than air next to or underneath vehicle 10 particularly when in a hot environment. Such air inlet and exhaust ports also could be located in the sides of engine module 16 close to the top and these same benefits realized. For present purposes, the air inlet and/or exhaust ports are located "about the top" of the engine module by being located in the top of the module or in a side of the module very close to the top thereof.

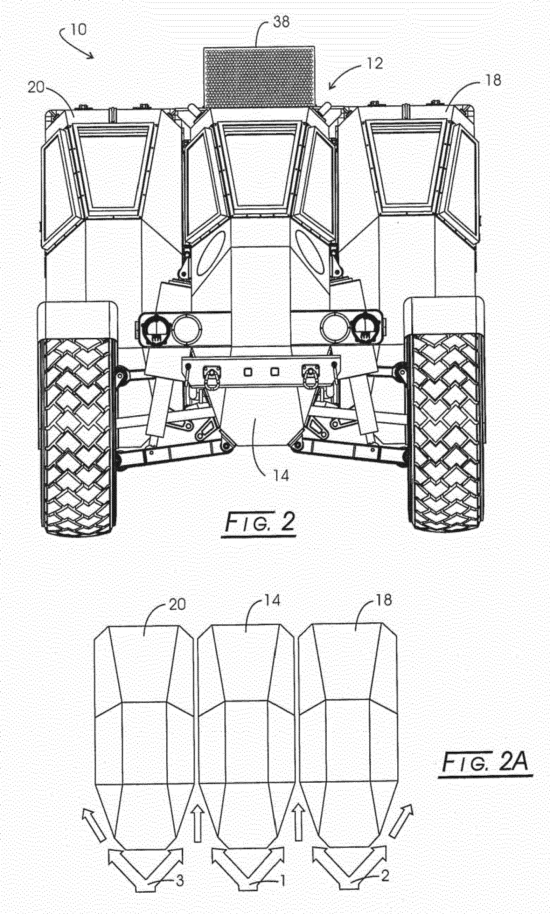

The bottoms of each module can be designed with upward slanting sides to aid in deflecting any blasts occurring from underneath modular military vehicle 10 to minimize damage. A blast energy dissipation pattern, 1, (see Fig. 2A) for driver module 14; a blast energy dissipation pattern, 2, for side module 18; and a blast energy dissipation pattern, 3, for side module 20, show the blast energy being diverted around the sides of the modules to lessen damage to the components of vehicle 10. Such pattern along with side modules 18 and 20 that can be controllably blown away from CCM 12 will help in minimizing vehicle damage from blasts occurring underneath virtually any area beneath vehicle 10.

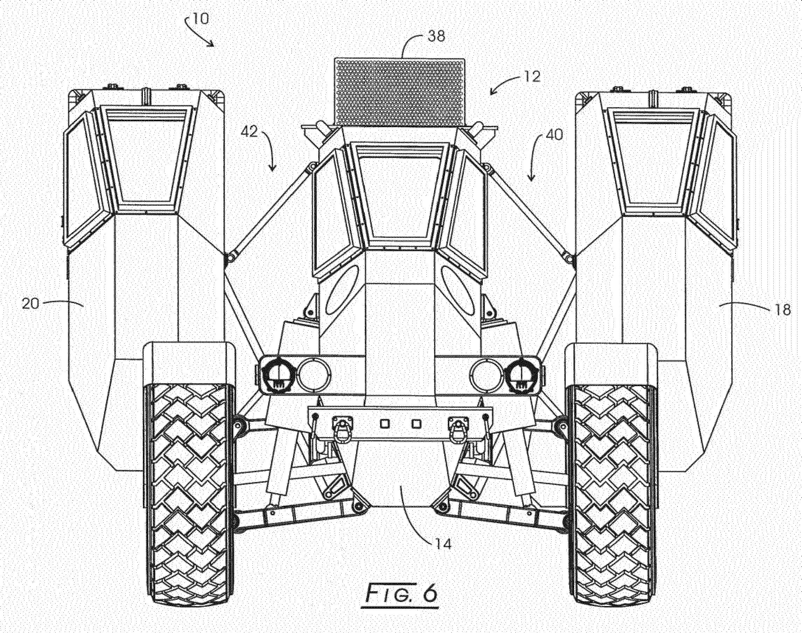

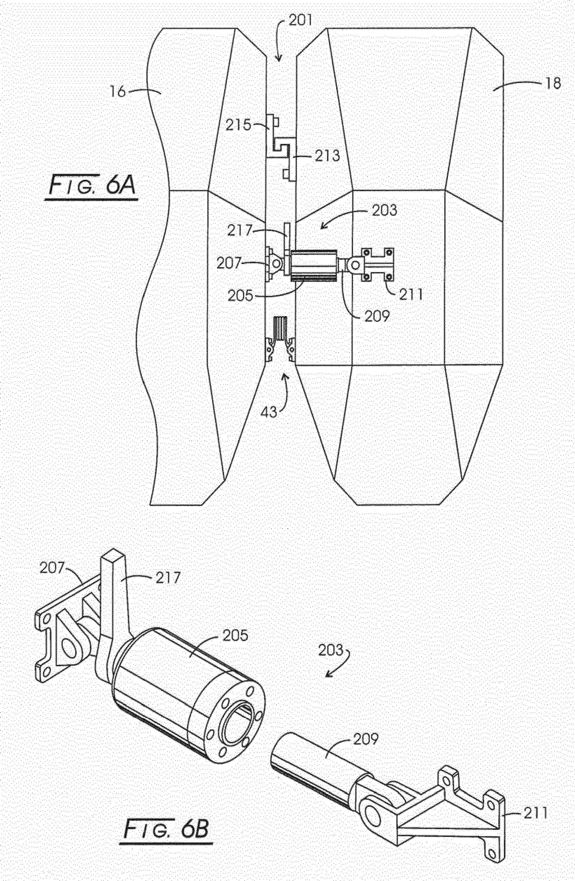

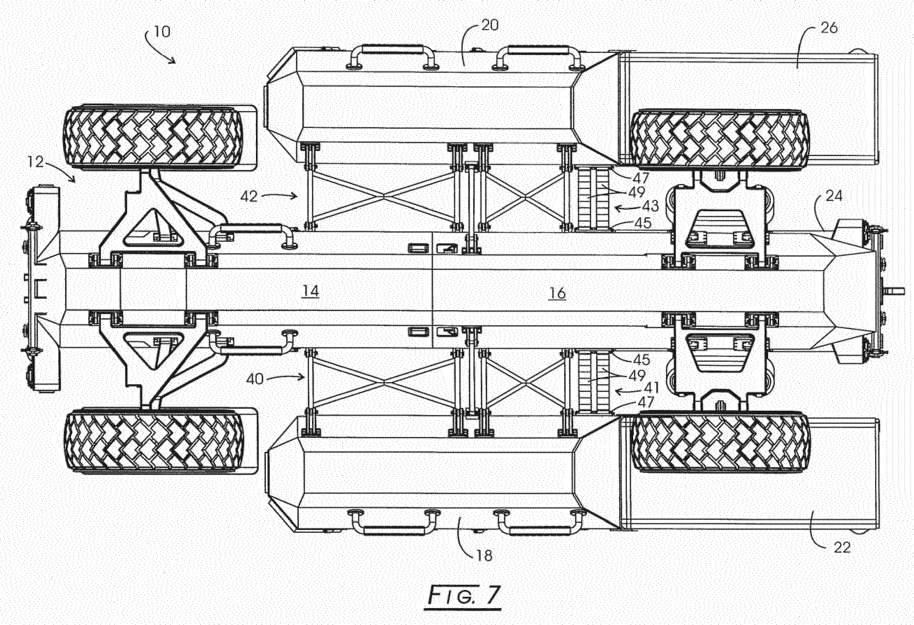

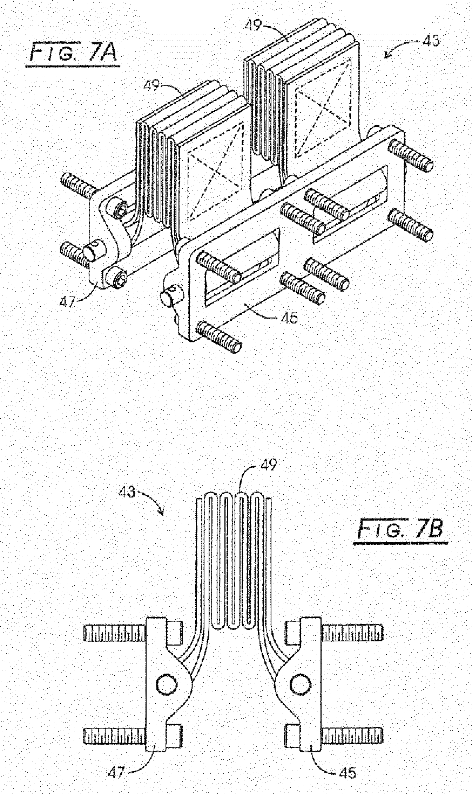

Referring now to Figs. 6 and 7, side pods 18 and 20 are seen in partially deployed condition up and away from CCM 12 using hydraulic pistons and supporting strut assemblies, 40 and 42, which are conventional in design and operation. Deployment of side pods 18 and 20 enjoys several advantages, including, inter alia, reducing the footprint size subject to road explosions, adding increasing distance from ground blasts, isolating pods subject to damage from blasts and explosions, and providing foot soldier protection between the side pods and CCM 12 (potentially with platforms that deploy for the soldiers to stand on upon deployment of the side pods). The blast deflecting bottom design also is seen to include a small horizontal flat or V bottom with angled flat sections that extend upwards. Such design presents a minimal footprint to explosions. The slanted sections and space created between the deployed side pods and CCM 12 deflect the brunt of the explosive force upwards away from the vehicle to minimize damage. The modular design permits any damaged pod to be readily replaced in the field and the vehicle put back in operation.

It should be observed that the hydraulic system for deploying the side pods or modules also could be adapted to move the side pods from an operating position adjacent to the CCM to the ground for removing the side pods and from the ground to an operating position. Thus, the hydraulic system could be adapted for putting on and taking off the side pods from the DMACS.

In the event of an explosion, the troop side pod coupling to the central element is "frangible", permitting the side pod to be dislodged by the explosion. It is thought that, to absorb some of the energy of the blast explosion, it is possible that a damper can be placed between the side pod and the CCM as part of the frangible system. The addition of this dampening mechanism may allow the pod to still remain attached to the CCM without breaking the frangible coupling.

With reference to Figs. 6A, 6B, and 7, side module 18 is illustrated affixed to engine module 16 using an interlocking bracket assembly, 201, a cylinder assembly, 203, and a tether assembly, 43. Together, these items make up the frangible coupling of the central element to the side module. Interlocking bracket assembly 201 is composed of a pair of "L" brackets, 213 and 215, which are retained in interlocked relationship by gravity. Additionally, attenuating assembly 203 (such as a cylinder assembly) is composed of a cylinder, 205, associated bracket, 207, a handle, 213, and interfitting rod, 209, and associated bracket, 211. Hooking a side module to the CCM is quick and easy by dint of the design of the frangible coupling assembly. Handle 213 is rotatable to cause pressure from cylinder 205 to be exerted on inserted rod 209. This ensures that the side module will stay attached during travel, such as, for example, over rough roads. The force of a blast, however, will cause rod 209 to withdraw from cylinder 205 and the tethers will limit the distance of travel of the dislodged module.

The troop side pod also can be retained to the CCM by means of tether assemblies (see also Figs. 7A and 7B), 41 and 43, whose ends are retained on both the CCM and the side pod by brackets, 45 and 47. The straps, 49, most likely will be in the form of webbing having a degree of elasticity and stitched together in a snaked or accordion pattern so that when the pod moves away from the CCM the stitching is broken as the tether unfolds.

The frangible coupling assembly and tether, then, are able to further absorb some of the explosion energy during an explosion, say, beneath the vehicle. In particular, the cylinder assembly pulls apart with some force as is typical for a cylinder and rod assembly, and by the ether stretching in much the same way that seat belts absorb energy during an accident. Here, however, in order for the pods not to decelerate too violently at the end of the straps, most likely some elasticity will be incorporated into the straps. As shown in Figs 7, 7A, and 7B, at least one pair of straps (for example, 3 pairs per side module) can used for each side pod. This number is arbitrary and could be greater or lesser in number.

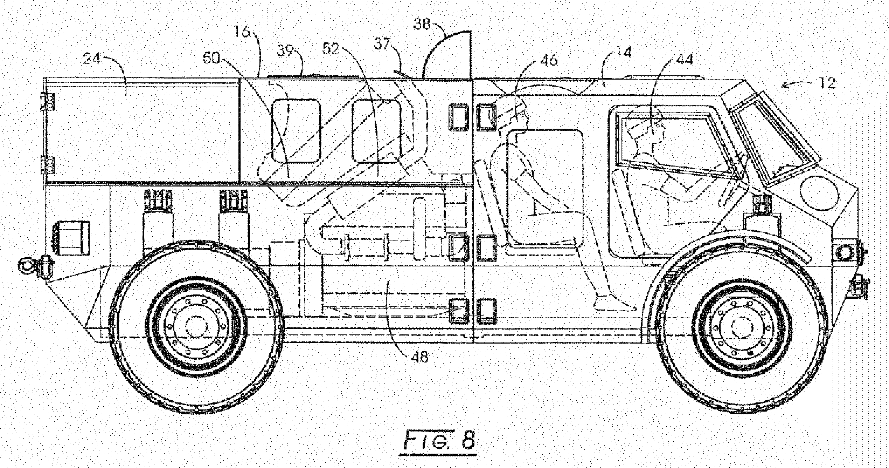

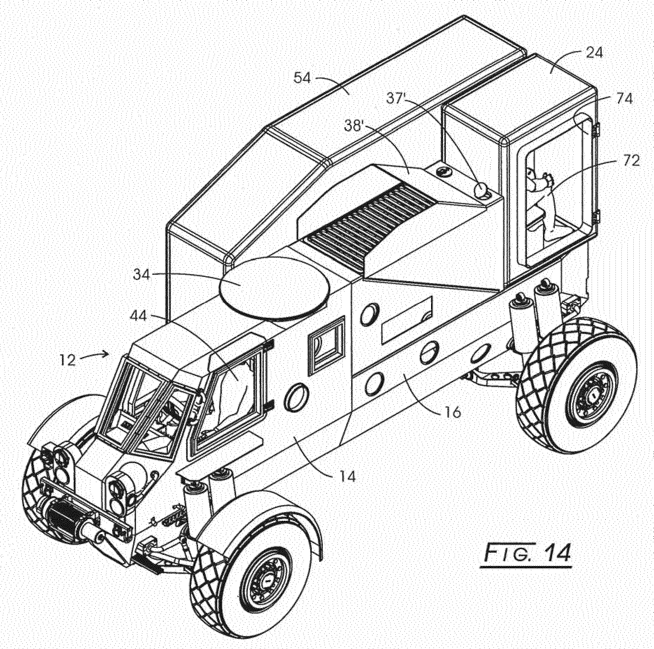

Personnel, 44 and 46, seated in driver module 14 are seen in Fig. 8. Also seen is an engine, 48, a radiator, 50, and a exhaust assembly, 52. Air for engine 48 and to cool radiator 50 is admitted through grate 38. Exhaust passed through exhaust assembly 52 passes to the atmosphere through port 37. Fresh air for personnel 44 and 46 is admitted via air inlets 38 on each side of the CCM above the engine (Fig. 14 rectangular hole above engine module 16). As observed earlier, locating the air inlets and exhaust atop vehicle 10 will minimize dust entry into vehicle 10. A presently preferred engine/radiator configuration, however, is illustrated in Fig. 14.

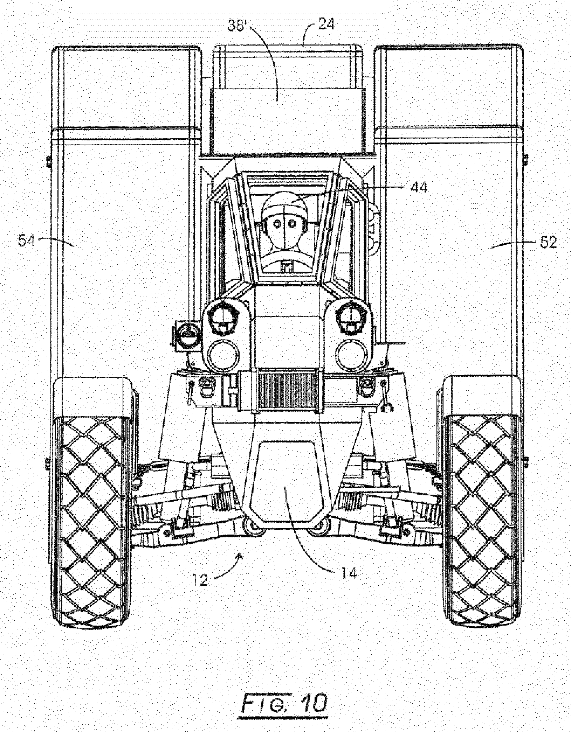

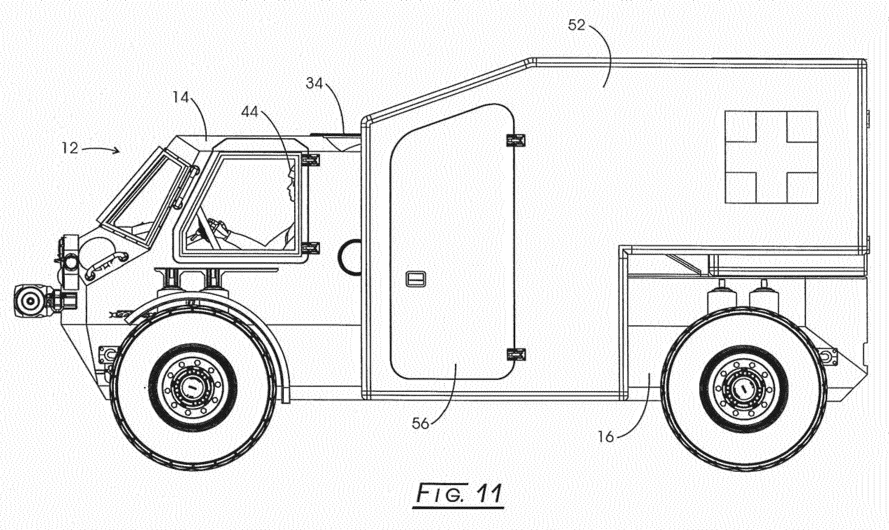

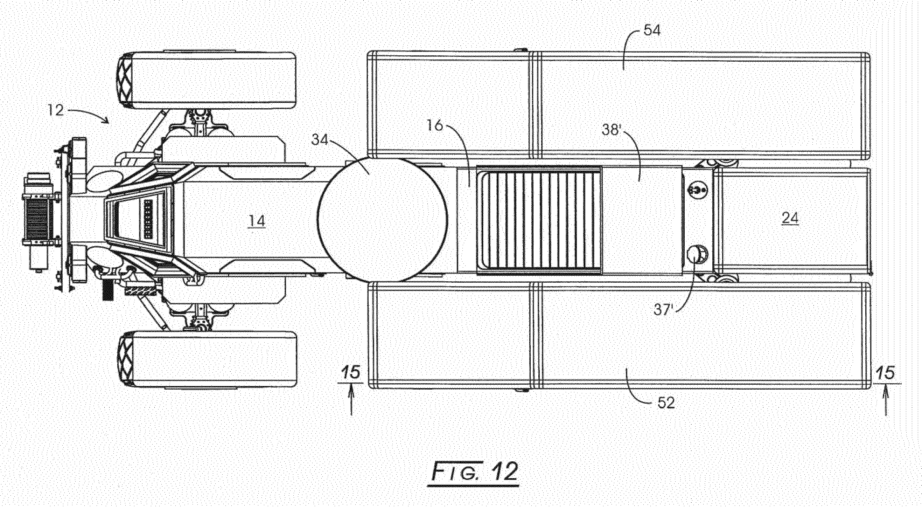

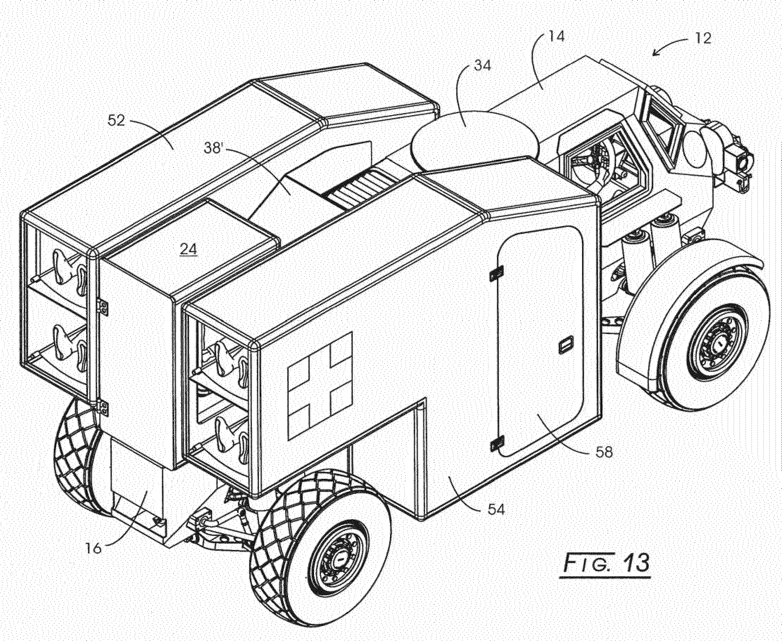

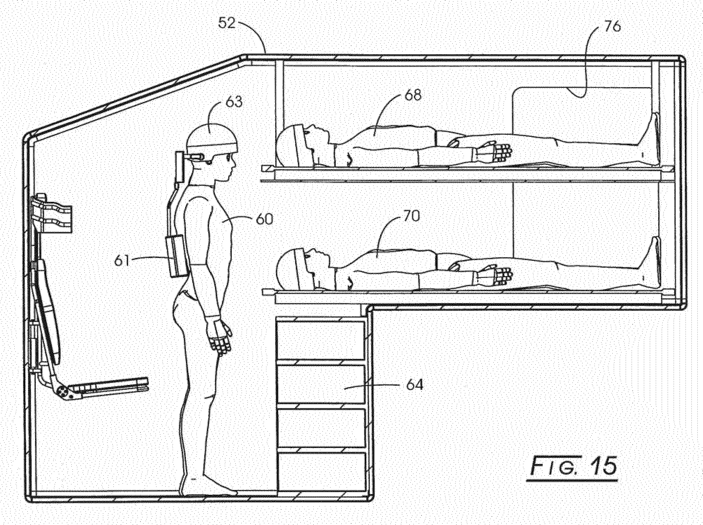

In Figs. 9-13, litter pods, 52 and 54, have been attached to CCM 12 to create a modular ambulance. CCM 12 remains unchanged from the previous drawings, except for an air intake, 38', and exhaust, 37'. Litter pods 52 and 54 may or may not be deployable. Litter pod 52 is fitted with a door, 56, while litter pod 54 also is fitted with a door, 58 (see Fig. 13). Medic personnel can enter litter pods 52 and 54 through doors 56 and 58. Wounded soldiers can be placed in litter pods 52 and 54 conveniently through rear access openings in litter pods 52 and 54, such as is illustrated in Fig. 13. Doors, netting, or other restrictions will be provided to keep the litters in litter pods 52 and 54. In Fig. 15, a medic, 60, is seen in medic pod 52 where he can attend to the needs of wounded soldiers on litters, 68 and 70, or can be seated on a seat, 62. A storage bin, 64, is provided to house medicines, instruments, and like items.

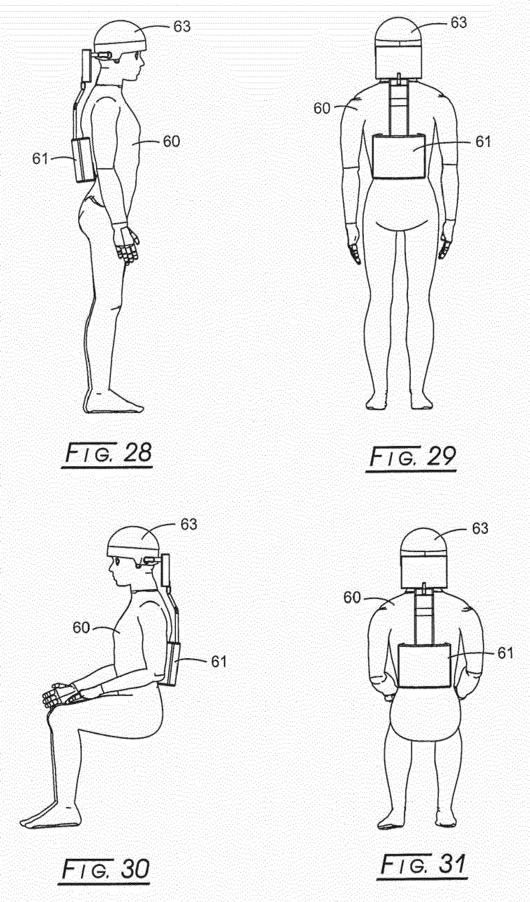

Medic 60 is fitted a SAPI panel, 61, affixed to his helmet, 63. Personnel 44 and 46 seated in driver module 14 also could be fitted with a SAPI panel, as, indeed, could any personnel confined within military module vehicle 10. Figs. 28-31 illustrate medic 60 again, standing and sitting. SAPI panel 61 is seen affixed to helmet 63 in addition to medic 60, regardless of whether in a seated or standing position. Such extended panel 61 from the SAPI pack will be secured with, for example, Velcro® into position within the soldier's ballistic vest and with the soldiers' ballistic collar. It is thought that a pivot at the top of this extended SAPI panel should be incorporated to allow the head to be turned easily and with comfort.

Since the narrow aspect of litter pods 52 and 54 permit medic to easily only treat the upper torso and head of the wounded soldier, module 24 is a personnel module for carrying an additional medic, 72, which can treat the legs and lower torso of the wounded soldiers. In order to accomplish such treatment, an access, 74, is created in module 24 that mates with a similar access, 76, in module 52. Similar accesses are provided for medic 72 to treat wounded soldiers in module 54. CCM 12 is illustrated in Fig. 18. In this embodiment a portable missile launcher, 96, is disposed atop driver module 14 and is desirably controlled by personnel 46, so that driver 44 can concentrate on driving CCM 12. Module 24 is mounted on rails, such as a rail, 25, and another rail on the far side of CCM 12 that is not seen in Fig. 18. Moving module 24 rearwardly away from CCM 12 also permits repair/maintenance access to the engine in engine module 16 and to the transmission and other drive train elements disposed therein. A cover conveniently at the rear of CCM 12, for example, could be opened to provide such servicing access.

That CCM 12 can be operated as a stand-alone vehicle is an advantage of the design disclosed herein. For that reason, CCM 12 and all disclosed modules can be manufactured from aluminum or composite material for weight reduction. Also, a layer "up armor" can be provided as a ballistic layer from a variety of composite materials presently used to shield military vehicles. When the side modules/pods are attached, they provide additional shielding for CCM 12 and drive components from being struck by ballistic impact.

Virtually all surfaces of all modules are designed to be manufactured from relatively flat, planar material (stressed skin), which contributes to reduced manufacturing costs. From the front, a narrow profile is presented, thus reducing the area vulnerable to being struck by bullets, shrapnel, or the like. Aligning personnel in a single row permits such narrow front profile. Similarly having each occupant in a narrow pod allows the effective use of side curtain and front air bags deployed in the event of a blast or accident. Basically being able to encase the occupants between inflated air bags and the seat should increase their likelihood of survival during a blast or accident. It is likely that to save weight, since the crew side pods are not required to carry any vehicle loads, their weight can be reduced allowing additional vehicle payload capacity.

Engine 48 can be any internal combustion engine powered by gasoline, diesel fuel, or the like, optionally turbocharged or supercharged; or can be a turbine engine; or any other power plant designed to propel vehicle 10. While the suspension is conventional for this type of vehicle, independent suspension is advantageous. Sufficient room underneath the driver module permits a driveshaft to pass therebeneath to provide 4-wheel or all-wheel drive for vehicle 10. It is possible that the vehicle also could incorporate an alternative drive system like electric or hydraulic.

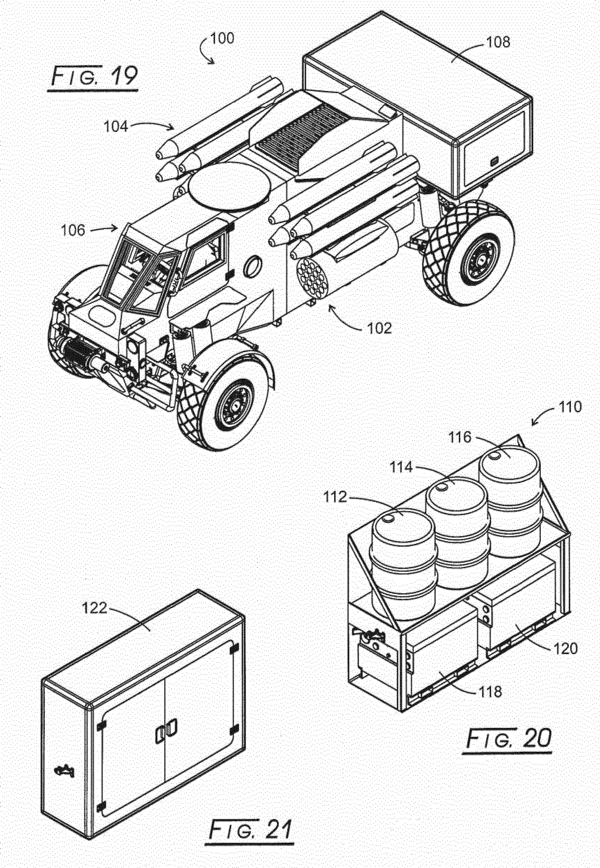

Fig. 19 illustrates a mobile missile launcher version, 100, of the deformable modular armored combat vehicle disclosed herein. In particular, a pair of side missile pods, 102 and 104, is affixed on either side of a CCM, 106. Personnel located within CCM 106 can control missile launch and target, or the target can be fed into an onboard computer remotely, say, for example, from air or ground reconnaissance. A rear storage module, 108, can convey spare missiles, for example or additional armament, such as, for example, an air-to-ground or air-to-air, or anti-tank, etc., missile. Armament, such as missiles, may require elevation to clear the CCM during firing.

Fig. 20 shows an additional side pod, 110, for transforming the modular combat vehicle into a mobile generator unit, conveying fuel drums, 112, 114, and 116; along with generators, 118 and 120. One or two such mobile generator side pods enable power to be brought into remote field or other locations.

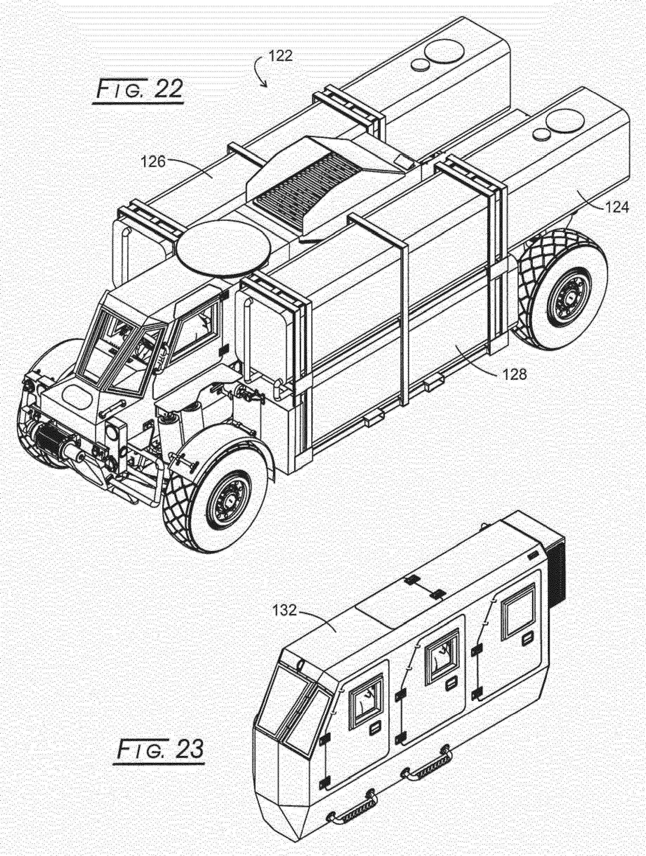

Fig. 21 shows another cargo side pod, 121. One or two of such side pods can be carried by the CCM. Again, the user can use almost any combination of pods on the CCM for extreme flexibility and utility. Fig. 22 illustrates a fuel tanker, 122, where fuel tanks are the side pods.

In particular, upper side pods, 124 and 126, have upper rear access for fuel. A pair of lower fuel pods, 128 and 130 (not seen), can be in fuel connection with upper fuel pods 124 and 126, or separately accessible.

Fig. 23 illustrates yet another troop side pod, 132, for conveying 3 soldiers per side pod. Again, one or both side pods could be the 3-troop versions.

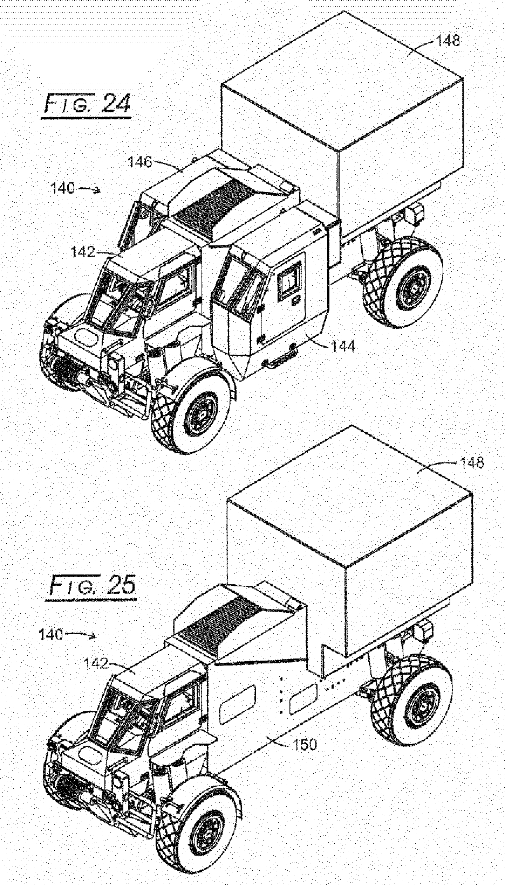

Fig. 24 illustrates a military vehicle, 140, configured with a short wheelbase, so as to accommodate only a single soldier (driver) in a CCM, 142. Side pods, 144 and 146, carry but a single soldier. Military vehicle 140, then, carries only 3 soldiers. At the rear, is a shelter, 148, for transport into the field (e.g., combat zone). Fig. 25 illustrates vehicle 140 without side pods. An engine module, 150, is revealed in greater detail.

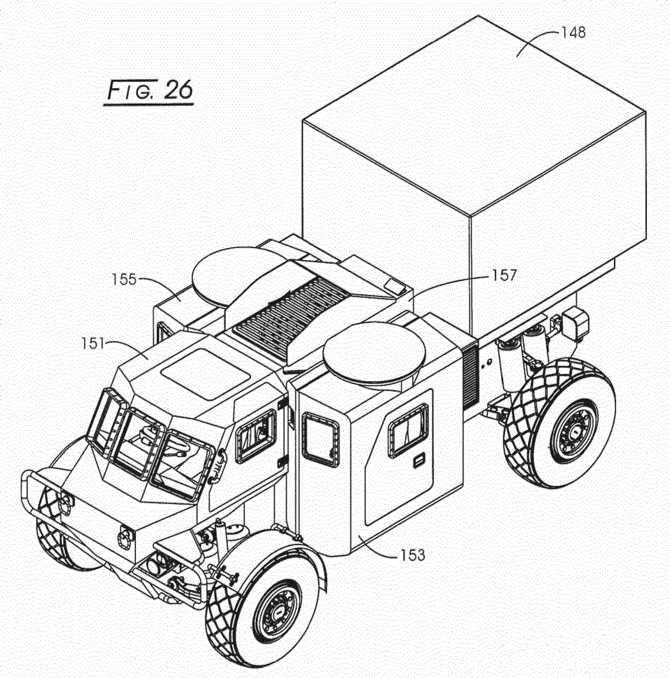

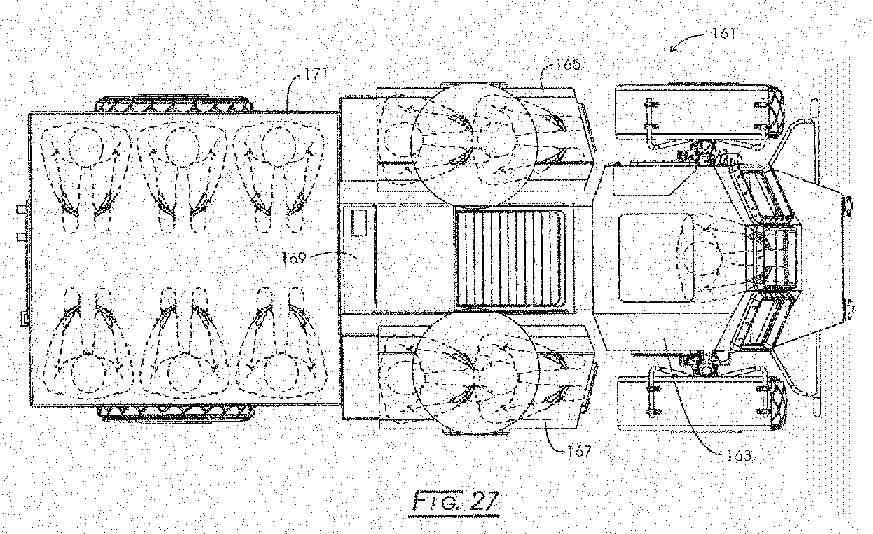

Fig. 26 illustrates a military vehicle having a driver module, 151, seating only the driver. A pair of side modules, 153 and 155, are attached to an engine module, 157. Shelter 148 is carried at the rear of the vehicle. The design flexibility of the disclosed modular military vehicle is enveloped in Fig. 27. A troop transport only modular military vehicle, 161, is illustrated. In order to increase the troop capacity, a driver module, 163, has been widened behind the driver in order to accommodate additional instruments, material, goods, etc. Side troop modules, 165 and 167, accommodate another 2 soldiers each and are carried by an engine module, 169. Finally, a rear troop module, 171, accommodates another 6 soldiers. The total troop capacity of module military vehicle 161 is 1 1 troops. Additionally with widening the driver module slightly an additional 2 crew can be seated behind the driver as is represented in Fig 30. This, then, would take the crew carrying capacity of this configuration to 13.

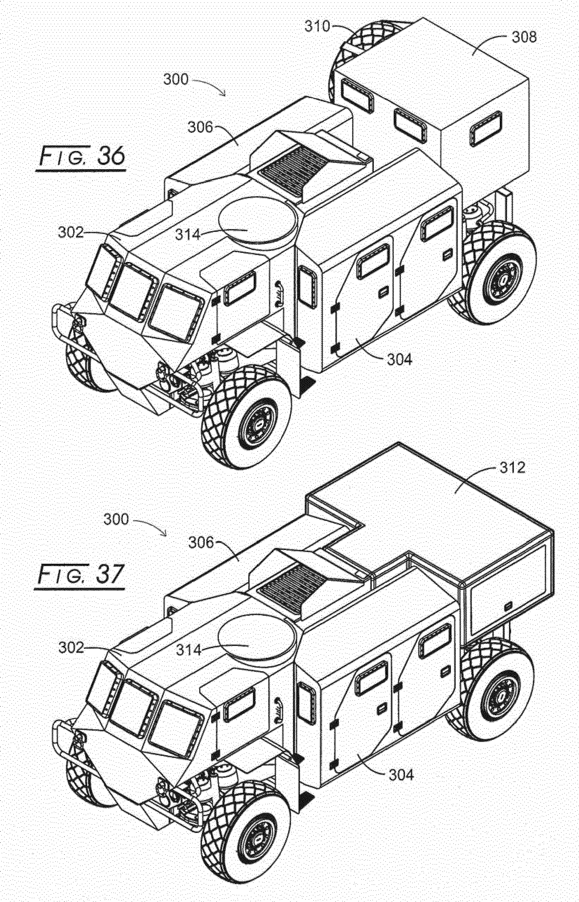

Fig. 36 expands upon the embodiment in Fig. 27 for a modular military vehicle, 300, which has an expanded driver module, 302, which has been widened for accommodating a driver in the forward position and 2 soldiers seated side-by-side behind the driver for a total of 3 troops in driver module 302. Side modules or side pods, 304 and 306, are troop pods adapted for 2 soldiers to be seated in each module. A rear module, 308, also can seat 3 soldiers. A spare tire, 310, is shown affixed to the side of rear module 308. Fig. 37 depicts the same basic vehicle 300, except that rear troop module 308 has been replaced with a cargo or armament module, 312. In both embodiment of vehicle 300, an overhead hatch, is located in the roof of driver module 302 for permitting a soldier to rise up for providing cover fire using rifle or other armament.

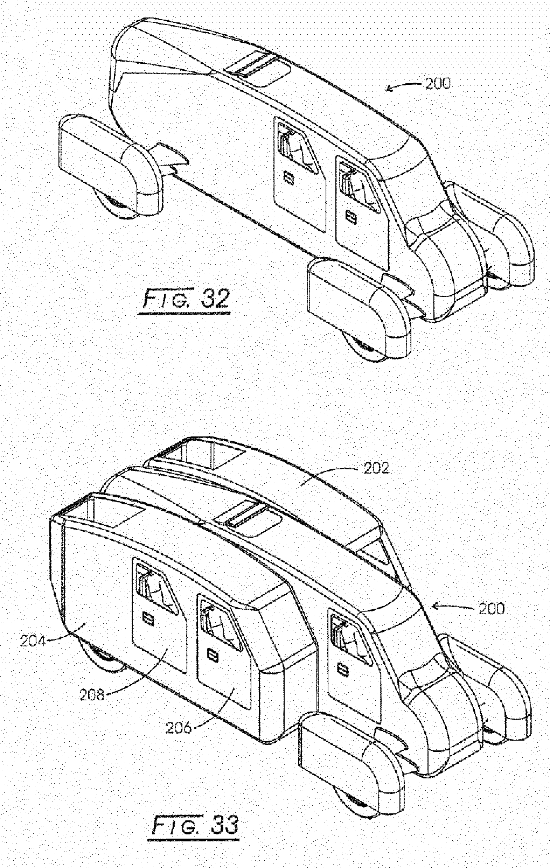

Commercial or civilian (non-military) versions of the modular vehicle are illustrated in Figs. 32-35. In particular, a civilian modular vehicle, 200, is seen to be streamlined in design, but again using the in-line seating design to present a narrow head-on profile for vehicle 200. The rear module contains the engine, with a possible storage disposed behind the engine.

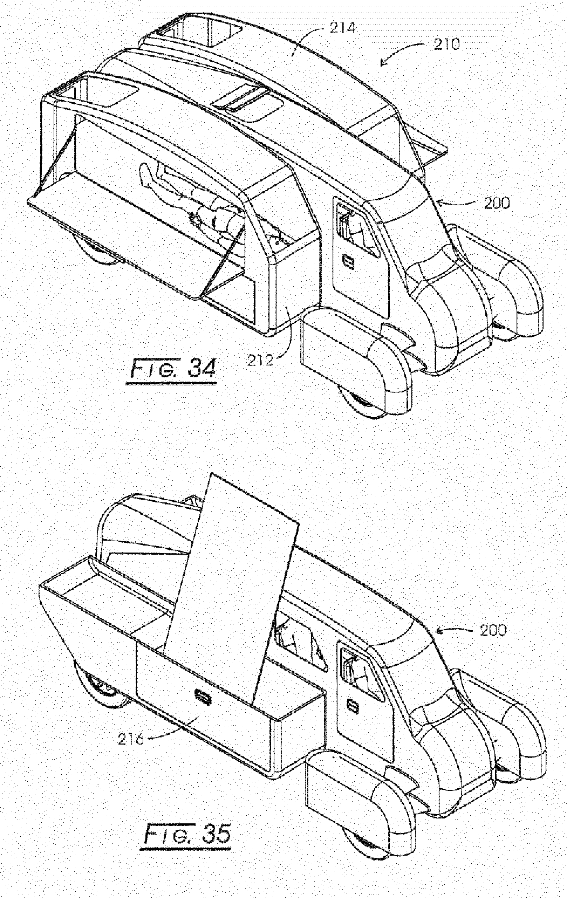

In Fig. 33, side modules, 202 and 204, are hung onto the sides of vehicle 200. Entry for passengers in pods can be gained though doors, 206 and 208, placed in side module 208. Similar doors can be provided for side module 202 and for the driver. A camping version, 210, is illustrated in Fig. 34, where camp stretcher modules 212 and 214 (fitted with skylights), are hung onto the sides of vehicle 200. In this embodiment, the sides of vehicle 200 will be open to side modules 212 and 214 in order to provide such treatment.

A "pickup" version of the disclosed modular vehicle is illustrated in Fig. 35 where a side storage module, 216, is carried on one side of vehicle 200 and entry/exit doors are provided on the side opposite for ingress and egress of people into vehicle 200. Again, depending upon the design goals, a rear storage module can be carried at the rear of vehicle 200.

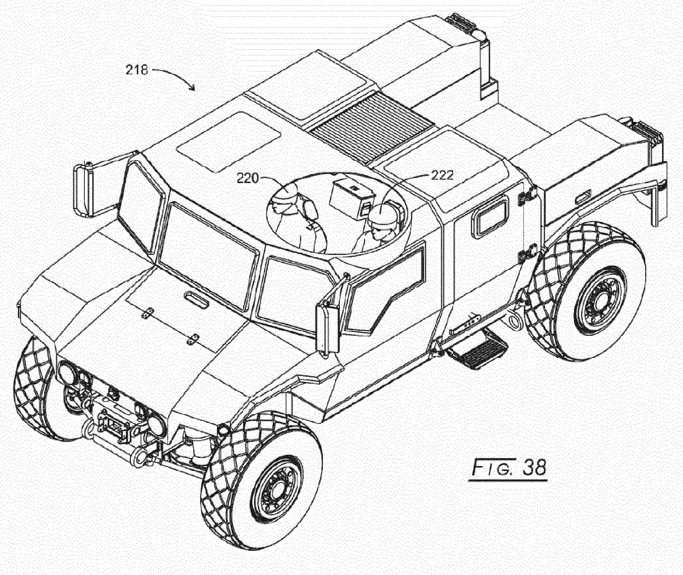

Fig. 38 shows an alternate design for a less than 20,000 lb gross vehicle weight, tactical wheeled vehicle, 218, having 3 primary seats and two single-seat side pods. This vehicle also maintains the modular design of the prior embodiments as well as the blast survivability features. A driver, 220, and two additional personnel (only one of which, 222, is visible in Fig. 38) sit across width of vehicle 218. The rear of vehicle 218 is adapted in this embodiment for cargo and/or occupant with a variety of cargo and/or additional occupant modules adaptable e to be carried at the rear of vehicle 218.

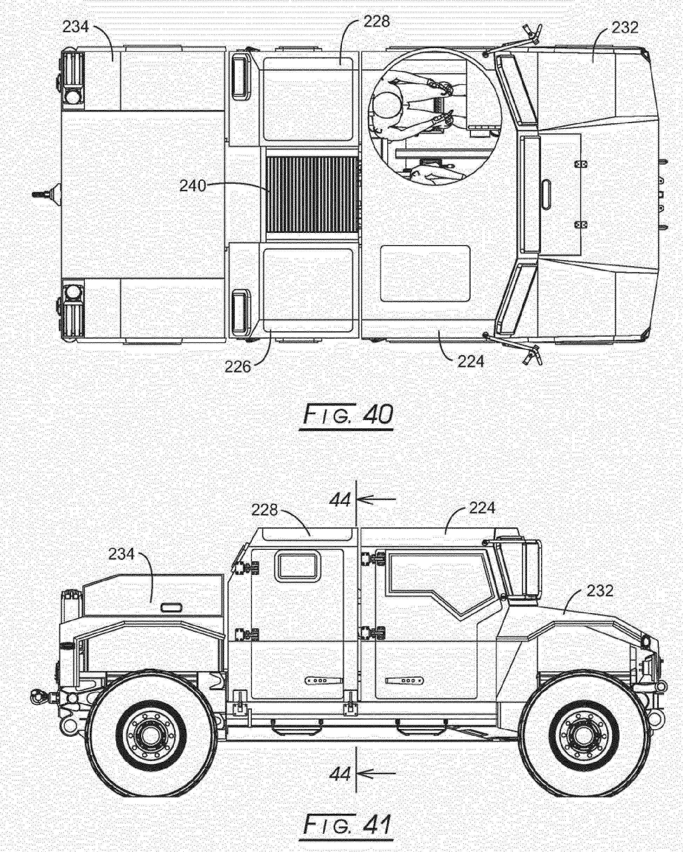

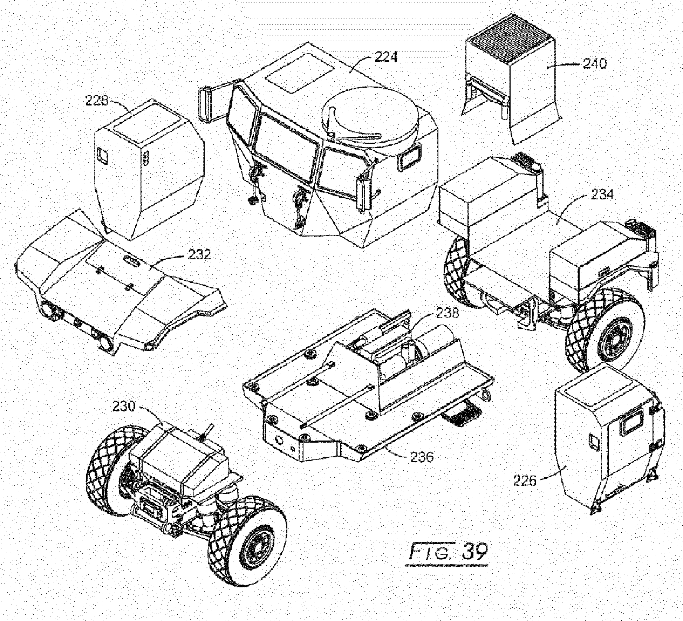

Referring now also to Figs. 39-41, vehicle 218 is formed from a plurality of modules seen in exploded view. A cab, 224, carries driver 220 and the two additional personnel seated on either side of driver 220. Alternatively, one of any of these three seating positions can be replaced with a gunner either with a remote or manual weapon station. A pair of single-person side pods, 226 and 228, are disposed immediately behind cab 224. A front tractive unit, 230, is forward of cab 224 and transmits power to the front wheels of vehicle 218. A hood, 232, covers and protects front tractive unit 230. A rear tractive unit, 234, transmits power the rear wheels of vehicle 218. A chassis, 236, is the platform upon which all of the other modules are carried. Chassis 236 also houses an engine, 238, which supplies power to front and rear tractive units 230 and 234, respectively, as well as for electrical and other systems in vehicle 218.

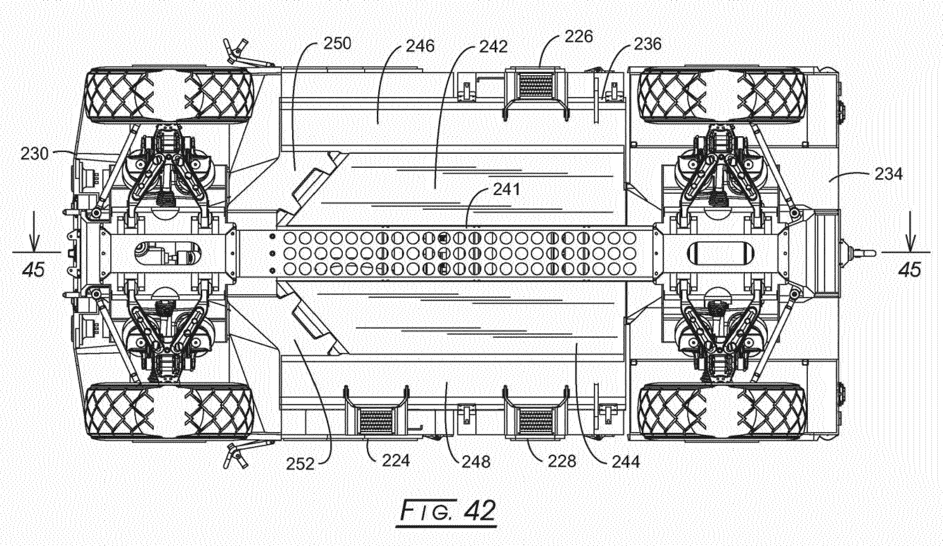

A cooling tower, 240, exhausts heat from vehicle 218, including from engine 238 and emits a "cooled" exhaust to minimize any heat signature from vehicle 218 that could be used for tracking the location of vehicle 218. Heat exchangers located within cooling tower 240 aid in vehicle 218 emitting a "cooled" exhaust from engine 238. Note, that the direction of airflow through the cooling core is from the top downward and the cooling air exits through the bottom of the engine bay area potentially through a central, apertured skid under the engine - this skid has many lightening holes for this purpose. Referring now also to Fig. 42, the underside of chassis 236 and cooling tower 240 are designed to improve blast survivability and blast management from buried apertures explosives or the like. Basically, the underside of chassis 236 exhibits true "V" design for deflecting blasts, structural underpinning for protection of occupants, and a channeling design for the blast to follow up into cooling tower 240, which acts like a chimney through which the blast is vented up and away from vehicle 218. Engine 238 and cooling tower 240 become sacrificial during a blast event for protection of the occupants in vehicle 218. In particular an apertured skid plate, 241, serves as a structural chassis member and provides venting for a blast through its open surface and also acts for the vehicle heat exchanger cooling exit in the reverse flow direction during normal vehicle operation. Panels, 242 and 244, situated on either longitudinal side of skid plate 241 are sacrificial panels, such as, for example, composite material panels, i.e. panels made from material that cannot support much deformation before they fragment into small parts. The solid structural area of skid plate 241, identified as items 246 and 248, have minimal surface area and a reduced blast footprint limiting transfer of blast energy to occupants. It should be observed that panels 246 and 248 slope upwardly and outwardly from skid plate 241 to horizontally disposed side chassis areas 246 and 248. The same is true for forward chassis areas, 250 and 252. This makes the underside of chassis 236 a true "V" shape for additional blast deflection away from vehicle 218. It is worth noting that the apertures in skid plate 241 not only reduces weight but also provides cooling air to flow downwardly past engine 238.

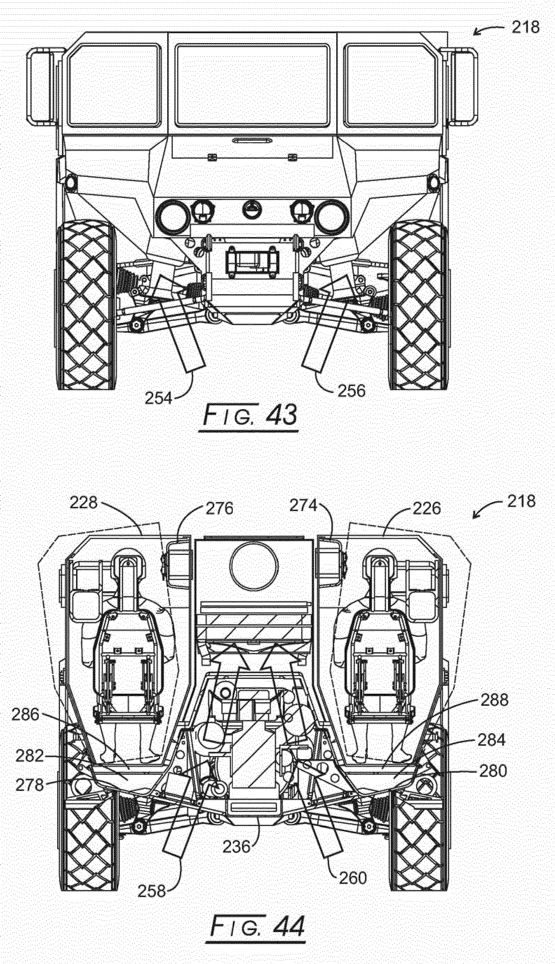

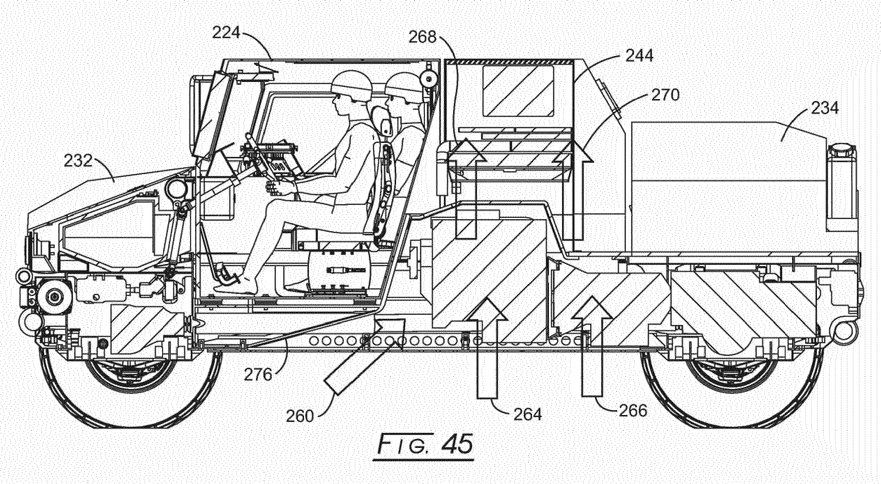

The "V" chassis shape can also be seen in Figs. 43 and 44. In Fig. 43, arrows, 254 and 256, depict the blast path being shunted upwardly and sidewardly due to the "V" underneath chassis shape. Such blast path aids in occupant survivability during a blast event. In Figs. 44 and 45, a second blast path is depicted by arrows, 258 and 260, in Fig. 44, and arrows, 260, 264, 266, 268, and 270, in Fig. 45. In particular, a blast event immediately underneath vehicle 218 passes through skid plate 241 and sacrificial panels 242 and 244 up into the compartment for engine 238. The blast, then, continues up through cooling tower 240 and to the atmosphere outside of vehicle 218. Engine 238 and cooling tower 240 become sacrificial to save vehicle occupants.

Side pods 226 and 228 also are pivotally connected at their bottoms to chassis 236, in similar fashion as described in connection with the other vehicle embodiments disclosed herein. A tethering system, 272 and 274, are attached to the side pods and to cab 224 to permit additional blast energy to be absorbed by such side pod rotation without ejecting the side pods and risking additional injury to the personnel seated in each side pod. It also is possible to affix cab 224 by a similar pivotal connection and with a tether permit cab 224 to rotate forwardly during a blast/shock event to absorb additional energy. It also possible that all three occupant pods not pivot, but may be connected as one unit and that the venting through the chimney is the only form of blast energy diversion.

In Fig. 45, a bulkhead, 276, is seen to run upwardly at an angle from the forward end of chassis 238 and, thence, at a less severe angle along the rear of cab 224 to provide additional blast protection to the occupants of cab 224. In Fig. 44, the "V" shaped underside shape of chassis 236 is evident. It also will be observed that sides, 278 and 280, of chassis 236 extend outwardly to underneath each side pod 226 and 228 to provide additional structural protection from blast events originating underneath vehicle 218. Interior chassis volumes, 282 and 284, between side pods 226 and 228, respectively, and chassis sides 278 and 280 provide additional shock/blast attenuation and ballistic protection for side pods 226 and 228. Finally, shock pieces, 286 and 288, disposed underneath side pods 226 and 228 and atop volumes 282 and 284, respectively, provide additional shock/blast attenuation by isolating the occupants of side pods 226 and 228 from blasts effects for increased occupant survivability. Cab or driver pod 224 can have a tube pass through cab 224 allowing a structural member to pass connecting bulkhead 272 of chassis 236 to bolt directly to rear tractive pod 234. Such tube would allow sufficient clearance to permit chassis 236 to move vertically if an impulse load was imparted to the bottom of chassis 236, i.e., when shock attenuating layers 282 and 284 become active and collapse somewhat. It also is likely that the shock attenuation elements in layers 286 and 288 could be simply vertical springs to attenuate the shock from volumes 282 and 284.

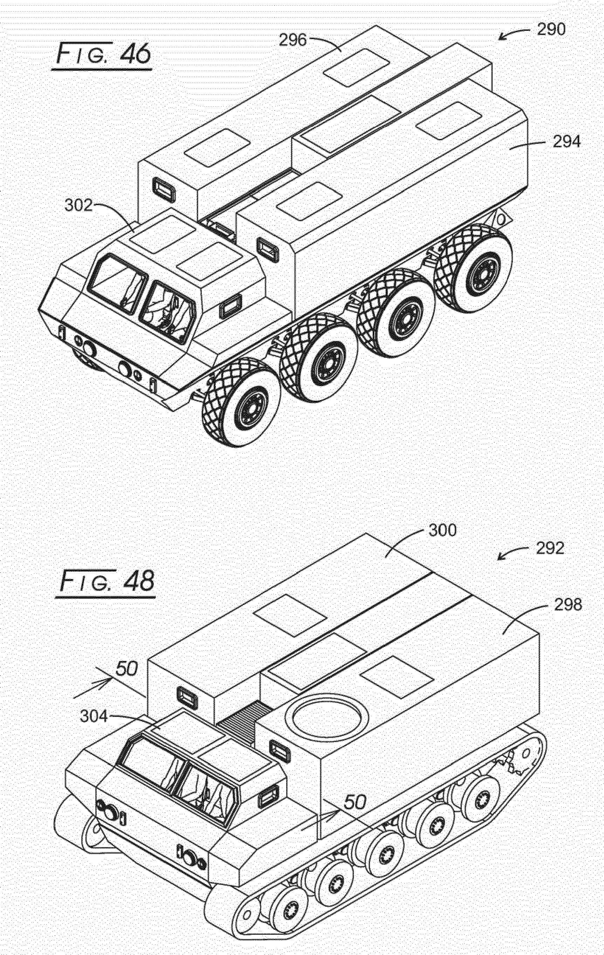

Referring now to the multi-wheeled vehicle embodiments illustrated in Figs. 46-49, the same modular concept with blast/shock attenuating and deflecting features has been designed into multi-wheeled vehicle, 290, and tracked vehicle, 292. Vehicles 290 and 292 have the same design but for the inclusion of tracks for vehicle 292; thus, only a single description will be given herein. Side pods, 294 and 296, carried by vehicle 290, and side pods, 298 and 300, are designed to carry 5 soldiers or other passengers in each such side pod. Cabs, 302 and 304, of vehicles 290 and 292, respectively, are designed for two soldiers to be seated side-by-side with one of the soldiers being a driver.

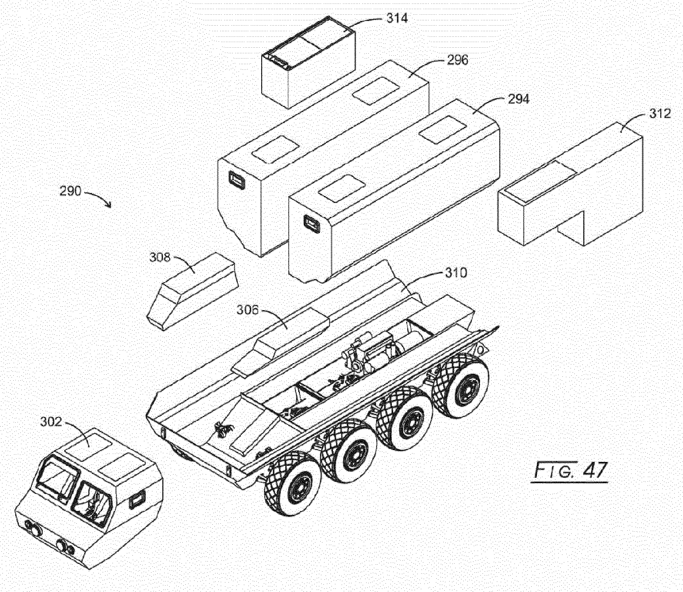

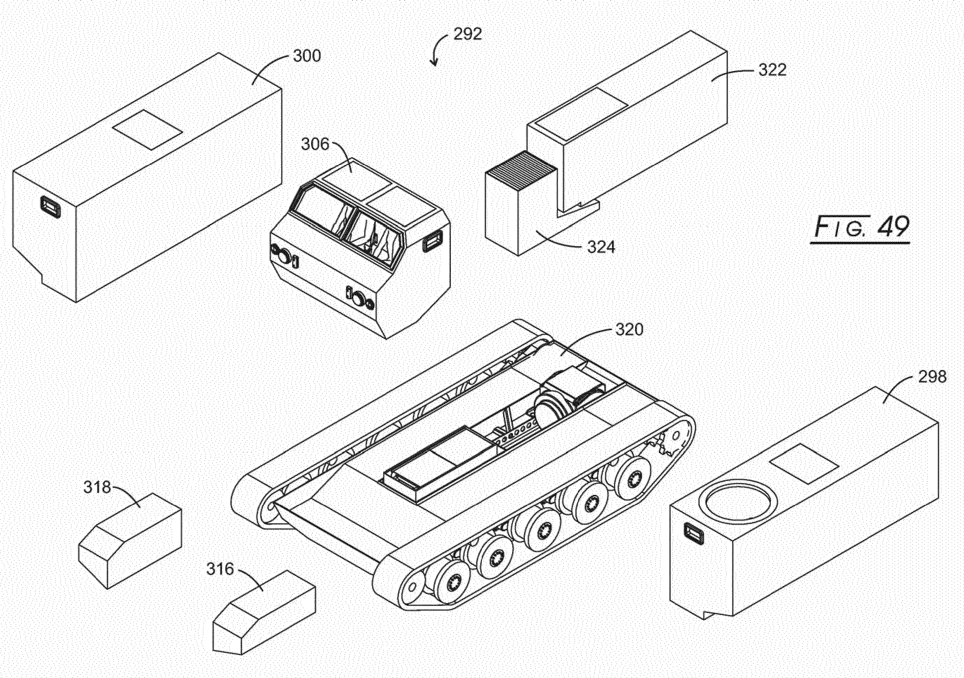

Referring additionally to Figs. 47 and 49, exploded views of vehicles 290 and 292 are illustrated to be modular in design. In particular with reference to vehicle 290 in Fig. 47, a pair of fuel tanks, 306 and 308, are located on each side of cab 302 are sit atop a chassis, 310. Chassis 310 has the same design features as chassis 236, described above. Thus, chassis 310 has a "V" underneath shape with a centrally-disposed engine forming a chimney for venting blast/shock events. A rearwardly and centrally located storage pod, 312, is located between side troop pods 294 and 296. A cooling tower, 314, is located over the engine compartment is designed to be part of the chimney through which blast/shock events pass to protect vehicle occupants, much in the manner as described in connection with vehicle 218. The problem that exists with the current vehicles used is that the vehicle design places the occupants between the wheels or tracks and because of the vehicle widths mean that there is very little possibility of there being any blast deflecting "V" elements and or venting possibilities. The disclosed design places the occupant further from the blast source and above substantial chassis, which has significant high "V" shape and also incorporates substantial venting of the blast between the "V" chassis hulls. A shock attenuation layer, like layers 286 and 288, are placed between chassis and occupant pods. This layer also is placed between the driver cab modules and the chassis elements. Occupant pods can readily be replaced with other pods or functional elements including a mobile gun system.

Referring now to Fig. 49 and tracked vehicle 292, fuel tanks, 316 and 318, are located beside cab 304 and atop a chassis, 320. A storage pod, 322, and cooling tower, 324, and provided in the same manner as described in connected with vehicle 290. A central blast path, like that shown in Fig. 45 similarly is designed into vehicle 292, as shown by blast path arrows, 324 and 326.

## Claims

1. A motorized vehicle suitable for military use and adaptable for non-military use, which comprises:
- a driver module (14);
- a first side module (18) attached to the driver module;
**characterized in that** the first side module (18) is a personnel side module (18) and each of the driver module (14) and the first personnel side module (18) presents a v-shaped hull on its underside, the v-shaped hulls being designed such as to form at least one blast energy dissipation path (1, 2) between the driver module (14) and the first personnel side module (18).

2. The motorized vehicle of claim 1, wherein said driver module (14) and an engine module (16) form a central chassis module (12).

3. The motorized vehicle of claim 2, wherein the engine module (16) is an open framework so as to allow significant blast venting.

4. The motorized vehicle of any one of claims 1 to 3 further including a second personnel side module (20) attached to the driver module (14) and presenting a v-shaped hull on its underside, wherein the v-shaped hull is designed such as to form at least one blast energy dissipation path (1, 3) between the driver module (14) and the second personnel side module (20).

5. The motorized vehicle of claim 4 wherein at least one of said first personnel side module and said second personnel side module is removably attached to said driver module.

6. The motorized vehicle of one of claims 2 and 3 and of one of claims 4 and 5, wherein the engine module (16) is manufactured with a tubular frame allowing significant blast venting between the first and second personnel side modules (18, 20).

7. The motorized vehicle of any one of claims 1 to 6, wherein the v-shaped hulls have upward slanting sides to aid in deflecting any blasts occurring from underneath the vehicle to minimize damage.

8. The motorized vehicle of any one of claims 1 to 7, wherein the at least one blast energy dissipation path diverts blast energy around upward slanting sides of the v-shaped hulls.

9. The motorized vehicle of any one of claims 1 to 8 wherein said first personnel side module (18) is removably attached to said driver module (14).

10. The motorized vehicle of any one of claims 1 to 8 wherein the driver module (14) is capable of carrying people and includes an area where a person may sit; the first personnel side module (18) is capable of carrying people and includes an area where a person may sit; and wherein the blast energy dissipation path reduces the penetration and deformation of the areas where people may sit.

11. The motorized vehicle of any one of claims 1 to 10, wherein the driver module (14) and the first personnel side module (18) include one or more of a seat, a litter, and a stretcher.

## Patentansprüche

1. Ein motorisiertes Fahrzeug, das für militärische Zwecke geeignet und für nichtmilitärische Zwecke verwendbar ist, welches umfasst:
- ein Fahrermodul (14);
- ein erstes Seitenmodul (18), das an dem Fahrermodul angebracht ist;
**dadurch gekennzeichnet, dass** das erste Seitenmodul (18) ein Personalseitenmodul (18) ist und jedes des Fahrermoduls (14) und des ersten Personalseitenmoduls (18) einen V-förmigen Rumpf auf seiner Unterseite aufweist, wobei die V-förmigen Rümpfe derart gestaltet sind, dass sie mindestens eine Explosionsenergiedissipationsstrecke (1, 2) zwischen dem Fahrermodul (14) und dem erstes Personalseitenmodul (18) bilden.

2. Motorisiertes Fahrzeug nach Anspruch 1, wobei das Fahrermodul (14) und ein Motormodul (16) ein zentrales Fahrgestellmodul (12) bilden.

3. Motorisiertes Fahrzeug nach Anspruch 2, wobei das Motormodul (16) ein offenes Rahmenwerk ist, um eine signifikante Explosionsenergieentlastung zu ermöglichen.

4. Motorisiertes Fahrzeug nach einem der Ansprüche 1 bis 3, ferner umfassend ein zweites Personenseitenmodul (20), das an dem Fahrermodul (14) angebracht ist und an seiner Unterseite einen V-förmigen Rumpf aufweist, wobei der V-förmige Rumpf derart ausgebildet ist, dass er mindestens eine Energiedissipationsstrecke (1,3) zwischen das Fahrermodul (14) und das zweite Personalseitenmodul (20) bildet.

5. Motorisiertes Fahrzeug nach Anspruch 4, **dadurch gekennzeichnet, dass** mindestens eins des ersten Personalseitenmoduls und des zweiten Personalseitenmoduls abnehmbar an dem Fahrermodul angebracht ist.

6. Motorisiertes Fahrzeug nach einem der Ansprüche 2 und 3 und nach einem der Ansprüche 4 und 5, wobei das Motormodul (16) mit einem rohrförmigen Rahmen hergestellt ist, der eine signifikante Explosionsdruckentlastung zwischen dem ersten und dem zweiten Personalseitenmodul (18, 20) ermöglicht.

7. Motorisiertes Fahrzeug nach einem der Ansprüche 1 bis 6, wobei die V-förmigen Rümpfe nach oben geneigte Seiten haben, um dazu beizutragen, jegliche Explosion abzulenken, die unterhalb des Fahrzeugs auftreten, um Schäden zu minimieren.

8. Motorisiertes Fahrzeug nach einem der Ansprüche 1 bis 7, wobei die mindestens eine Explosionsenergiedissipationsstrecke die Explosionsenergie um die nach oben geneigten Seiten der V-förmigen Rümpfe ablenkt.

9. Motorisiertes Fahrzeug nach einem der Ansprüche 1 bis 8, wobei das erste Personalseitenmodul (18) entfernbar an dem Fahrermodul (14) befestigt ist.

10. Motorisiertes Fahrzeug nach einem der Ansprüche 1 bis 8, wobei das Fahrermodul (14) Personen transportieren kann und einen Bereich enthält, in dem eine Person sitzen kann; das erste Personalseitenmodul (18) in der Lage ist, Personen zu befördern und umfasst einen Bereich, in dem eine Person sitzen kann; und wobei die Explosionsenergiedissipationsstrecke das Eindringen und die Verformung der Bereiche, in denen Menschen sitzen können, reduziert.

11. Motorisiertes Fahrzeug nach einem der Ansprüche 1 bis 10, wobei das Fahrermodul (14) und das erste Personalseitenmodul (18) einen oder mehrere von einem Sitz, einer Koje und einer Bahre umfasst.

## Revendications

1. Un véhicule motorisé adapté à un usage militaire et adaptable à un usage non militaire, qui comprend:
- un module pour conducteur (14);
- un premier module latéral (18) fixé au module pour conducteur;
**caractérisé en ce que** le premier module latéral (18) est un module latéral pour personnel (18) et chacun des modules pour conducteur (14) et du premier module latéral pour personnel (18) présente un coque en forme de v sur la face inférieure, les coques en forme de v étant conçues de manière à former au moins un chemin de dissipation d'énergie de souffle (1,2) entre le module pour conducteur (14) et le premier module latéral pour personnel (18).

2. Véhicule motorisé selon la revendication 1, dans lequel ledit module pour conducteur (14) et un module de moteur (16) forment un module de châssis central (12).

3. Véhicule motorisé selon la revendication 2, dans lequel le module de moteur (16) est un cadre ouvert de manière à permettre une ventilation importante par soufflage.

4. Véhicule motorisé selon l'une quelconque des revendications 1 à 3, comprenant, en outre, un deuxième module latéral pour personnel (20) fixé au module pour conducteur (14) et présentant une coque en forme de V sur sa face inférieure, la coque en forme de V étant conçue pour former au moins un chemin de dissipation d'énergie de souffle (1,3) entre le module pour conducteur (14) et le deuxième module latéral pour personnel (20).

5. Véhicule motorisé selon la revendication 4, dans lequel au moins l'un desdits premier module latéral pour personnel et deuxième module latéral pour personnel sont fixés de manière amovible au module pour conducteur.

6. Véhicule motorisé selon l'une des revendications 2 et 3 et selon l'une des revendications 4 et 5, dans lequel le module de moteur (16) est fabriqué avec un cadre tubulaire permettant une ventilation importante par soufflage entre les premier et second modules latéraux pour personnel (18, 20).

7. Véhicule motorisé selon l'une quelconque des revendications 1 à 6, dans lequel les coques en forme de v ont des côtés inclinés vers le haut pour aider à dévier toutes les explosions se produisant sous le véhicule afin de minimiser les dommages.

8. Véhicule motorisé selon l'une quelconque des revendications 1 à 7, dans lequel l'au moins un chemin de dissipation d'énergie de souffle dévie de l'énergie de souffle autour des côtés inclinés vers le haut des coques en forme de V.

9. Véhicule motorisé selon l'une quelconque des revendications 1 à 8, dans lequel ledit premier module latéral pour personnel (18) est fixé de manière amovible audit module pour conducteur (14).

10. Véhicule motorisé selon l'une quelconque des revendications 1 à 8, dans lequel le module pour conducteur (14) est capable de transporter des personnes et comprend une zone où une personne peut s'asseoir; le premier module latéral pour personnel (18) est capable de transporter des personnes et comprend une zone où une personne peut s'asseoir; et dans lequel le chemin de dissipation d'énergie de souffle réduit la pénétration et déformation des zones où les gens peuvent s'asseoir.

11. Véhicule motorisé selon l'une quelconque des revendications 1 à 10, dans lequel le module pour conducteur (14) et le premier module latéral pour personnel (18) comprennent un ou plusieurs sièges, une couchette et une civière.
